Europäisches Patentamt

European Patent Office

Office européen des brevets

(11) Publication number: **0 028 472**
**B1**

(12) **EUROPEAN PATENT SPECIFICATION**

(45) Date of publication of patent specification: **18.04.84**

(51) Int. Cl.³: **G 06 F 9/26**

(21) Application number: **80303651.6**

(22) Date of filing: **16.10.80**

(54) **Digital computer having programmable structure.**

(30) Priority: **24.10.79 US 87666**

(43) Date of publication of application:
**13.05.81 Bulletin 81/19**

(45) Publication of the grant of the patent:
**18.04.84 Bulletin 84/16**

(84) Designated Contracting States:
**BE DE FR GB IT LU NL SE**

(56) References cited:
**DE - A - 2 418 941**
**US - A - 4 159 520**
**US - A - 4 159 589**
**US - A - 4 160 290**

**PROCEEDINGS OF THE COMPCON, Conference September 4-7, 1979 NEW YORK (US), B. HASHIZUME et al.: "The LSI-11/23 Control Store Microarchitecture", pages 67-70**
**ELECTRONICS, vol. 51, no. 10, May 11, 1978, NEW YORK (US) D. WYLAND: "Managing the flow of data is easy with programmable multiplexer", pages 132-135**

(73) Proprietor: **BURROUGHS CORPORATION**
**Burroughs Place**
**Detroit, Michigan 48232 (US)**

(72) Inventor: **Potash, Hanan**
**6923 Paseo Laredo**
**La Jolla California 92034 (US)**
Inventor: **Levin, Burton Lee**
**10335 Leafwood Place**
**San Diego California 92131 (US)**
Inventor: **Chan, Stephen J.C.**
**11130 Pegasus Avenue**
**San Diego, California 92126 (US)**

(74) Representative: **Kirby, Harold Douglas Benson et al,**
**Marlborough Lodge 14 Farncombe Road**
**Worthing West Sussex BN11 2BT (GB)**

(56) References cited:
**ELECTRONIC DESIGN, vol. 25, no. 10 May 10, 1977, ROCHELLE PARK (US), CLYMER: "Use 4-bit slices to design powerful microprogrammed processors. The 2900 family of circuits lets you build machines with cycle times of 110 ns. pages 62-71**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

MACHINE DESIGN, vol. 50, no. 8, April 1978, CLEVELAND (US) DUMMERMUTH: "Bit-slice micro-processors. Minicomputer speed in a micro package"
ELECTRONIC DESIGN, vol. 27, no. 11, May 24, 1979, ROCHELLE PARK (US) MRAZEK: "Boost bit-slice micro-sequencer speed: Choose from eight different circuits", pages 118-123

Digital computer having programmable structure

Background of the invention

This invention relates to digital computers; and more particularly to the computer's overall architecture. In the prior art, a wide variety of computer architectures existed. However, they all basically fall into the two broad categories of being either a microprogrammed or a non-microprogrammed machine.

A non-microprogrammed computer can be characterized as one which interprets and executes user level instructions directly with a plurality of hardwired logic gates. In comparison, a microprogrammed computer interprets and executes each user level instruction by executing a series of microcommands. These microcommands in turn are interpreted and executed by the hardwired logic gates.

One attractive feature of the microprogrammed computer is its regularity and simplicity in architecture. This is due to the fact that the microcommands, which the hardwired logic interprets and executes, generally are much simpler than the corresponding user level commands. Thus, a microprogrammed computer having one particular user level command set generally will contain substantially fewer hardware logic gates than a non-microprogrammed computer with the same user level command set.

Those logic gates which are eliminated in the microprogrammed computer however, are replaced with a set of microcommands in the control memory. Thus, the total hardware in a microprogrammed computer, including the control memory, is generally about the same as that in a corresponding non-microprogrammed computer. However, it is much easier to modify microcommands in a control memory than it is to add and delete hardwired logic gates and their interconnections. This is a most important requirement in computers whose user level language is subject to change, and in computers, which emulate several user level languages. Thus, another feature of a microprogrammed computer, and perhaps its most important feature is its flexibility and the ease with which modifications can be incorporated.

But in the prior art, the extent to which even a microprogrammed computer could be modified was constrained because the logic which implemented the microcommands was hardwired. Thus, the set of microcommands that a programmer could use was fixed; and only their order in the control memory was programmable. Accordingly, new types of microcommands could be added only at the expense of modifying various hardwired logic gates and their interconnections. And this made the personality of the machine too rigid.

However, in an article by D. Wyland, published in Electronics Volume 51, No. 10, a memory organisation is described, including a control memory for storing control words, addressed by outputs from a PROM, itself addressed partly by op-codes from the micro instruction register and partly by operands from instruction registers.

Further, German Offenlegungsschrift 2418941 discloses a memory organisation of 3 ROMs, each handling a 2-bit slice addressed by operands and op-codes. At each addressable memory location there is stored a signal which represents a transformation of the operand portion of the address of that location, which transformation is specified by the op-code portion of said address.

The object of this invention is to provide a more flexible architecture for a digital computer.

In accordance with the present invention, the control section of a digital computer includes a plurality of registers, each having its $i$th bit coupled to a first address input on the $i$th one of $N$ memories, where $i=1, \ldots N$. The second address inputs of the $N$ memories are coupled to a control memory to receive a portion of the presently active memory control word therefrom. Each of the $N$ memories is responsive to the control word portion on its second address inputs to generate signals on its pair of outputs, representing programmable arithmetic transformations of the bits on its first address inputs. The signals on the pairs of outputs of all the $N$ memories are combined and fed to the control memory to address a successive control word. Preferably the $N$ memories are programmable. This allows the types of branches which are taken to be readily modified. It is to be understood that the exact type of transformation which occurs in response to any particular control word portion is programmable.

A similar programmable structure can be employed in the data section of the computer. This programmable structure includes a set of $N$ memories where each of the $N$ memories has first address inputs, two pairs of outputs, and second address inputs which are coupled to the control section to receive a portion of a presently active control word. Each memory of the set is responsive to the control word portion on its second address inputs to provide transformations of the information bits on their first address inputs. These information bits are provided by a plurality of $N$-bit wide registers which have their $i$th bit coupled to a first address input on the $i$th one of the $N$ memories, where $i=1, \ldots N$. The respective pairs of outputs for each of the $N$-memories are provided as inputs to a pair of adders, the outputs of which being coupled as inputs to a programmable multiplexer. The multiplexer shifts the output of the adder by a programmable number of bit positions in response to another portion of the active control word.

In another embodiment of the invention, the control and data section are integrated and share a single memory organization. In this embodiment, control words are generated during spaced apart time intervals, while operands are transformed in response to those control words between the spaced apart time interval. This programmable structure also includes a set of N memories arranged in a bit-sliced fashion, each of the N memories have first address inputs, second address inputs, and two pairs of outputs. Associated with the memory organization is a plurality of N-bit wide registers, which have their ith bit coupled to a first address input of the ith one of the N memories, where i=1, ...N. In addition, there are first and second adder means, respectively, coupled to the output pairs of the N memories. A control memory has address signals coupled to receive an address from one of the plurality of registers, and has outputs for forming the control words thereon. A plurality of $2 \times 1$ switches couple one portion of the control words to the second address inputs of all of the N memories during the spaced apart time intervals, and couple another portion of the control words thereto between the spaced time intervals.

Brief description of the drawings

Various features and advantages of the inventions will best be understood by reference to the following detailed description and accompanying drawings wherein:

Figure 1 is a schematic block diagram of a digital computer constructed according to the invention.

Figure 2 illustrates various transformations that are performed by the set of N memories in the control section of the Figure 1 embodiment.

Figure 3 illustrates one suitable code for the set of N memories which achieves the transformations of Figure 2.

Figure 4 illustrates representative examples of the transformations that are performed by the set of N memories in the data section of the Figure 1 embodiment.

Figure 5 is a timing diagram illustrating the sequence by which the data section and control section of the Figure 1 embodiment interact.

Figure 6 is a schematic block diagram illustrating another embodiment of the invention.

Figure 7 is a timing diagram illustrating the sequential operation of the Figure 6 embodiment.

Figure 8 is a greatly enlarged plan view of a physical layout on a semiconductor chip for a portion of the Figure 1 and Figure 6 embodiments.

Figure 9a is a detailed circuit diagram and physical layout for the programmable multiplexer of Figure 8.

Figure 9b is a detailed circuit diagram and physical layout for one memory of the set in the physical layout of Figure 8.

Detailed description

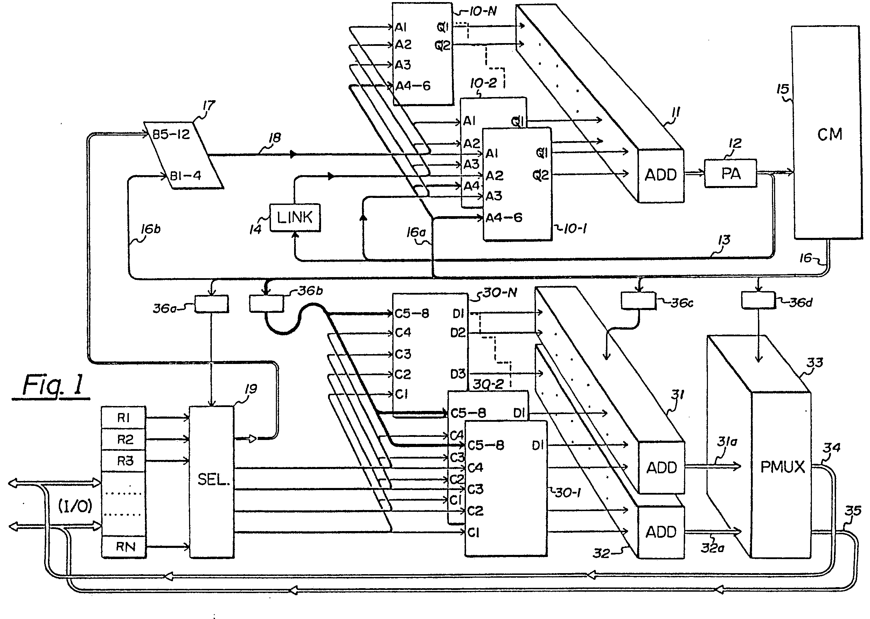

Referring now to Figure 1, a preferred embodiment of the invention will be described. Basically, this embodiment is comprised of a control section, which is illustrated in the top portion of Figure 1; and a data section, which is illustrated in the bottom portion of that figure. The function of the control section is to sequentially generate control words, while the function of the data section is to simultaneously transform operands in response to those control words.

Included in the control section is a set of N memories 10-1, 10-2, ... 10-N arranged in a bit-sliced fashion. Each of these N memories have first address inputs A1—A3, second address inputs A4—A6, and a pair of outputs Q1—Q2. In operation, signals on the outputs Q1 and Q2 from all of those N memories are summed by an adder 11, and the result is held in a register 12. Then, the least significant bit position of register 12 is fed back to one of the three first address inputs, namely, A3 of memory 10-1; the next bit position in order of significance of register 12 is fed back to the first address input A3 of memory 10-2, and so on. Register 12 has as many bit positions as there are memories in the set of N memories. As will be seen, the function of register 12 is to store the address of the current control word.

All of the bits of register 12 also couple via bus 13 to a link register 14. Bus 13 is a N-bit bus and register 14 is at least N-bits wide. The least significant bit position of the link register 14 connects to another one of the three first address inputs, namely, A2 of memory 10-1, while the next bit position of link register 14 in order of significance connects to the first address input A2 of memory 10-2, and so on.

Associated with the N memory set 10 is a control memory 15. Address information for the control memory 15 is obtained from register 12, which has its outputs connected to the address inputs of control memory 15. This control memory 15 contains a plurality of control words which are read onto a bus 16. One portion 16a of the bus 16 is fed back to the second address inputs A4—A6 of all of the N memories, 10-1 through 10-N; while another portion 16b of the bus 16 is connected to the address inputs B1—B4 of a memory 17. Address inputs B5—B12 of that memory are selectively coupled to the output of one of a plurality of registers R1, R2, ... RN through a selector 19. The outputs 18 of the memory 17 is coupled respectively to one of the three first address inputs, namely, A1 of each of the N memories 10-1 through 10-N.

All of the above components 10 through 19 of the control section operate to sequentially generate control words with a minimum of hardwired logic. Initially, register 12 is reset to some predetermined address, such as all 0's. The control word stored in the control memory 15 at that address is then read out onto bus 16. In response to the portion 16b of the control word, memory 17 is designed to provide on its outputs 18, a transformation of the bits on its inputs B5—B12, which bits are obtained from the information stored in the plurality of register R1—RN. In response to the presence of portion 16a of a retrieved control word, each of the N memories 10-1 through 10-N is designed to provide on their respective outputs, Q1 and Q2, a transformation of the information bits on their three first address inputs, A1—A3. Adder 11 in turn sums the signals on outputs Q1 and Q2 from all of the N memories, and the result constitutes the address of the next control word to be obtained from control memory 15.

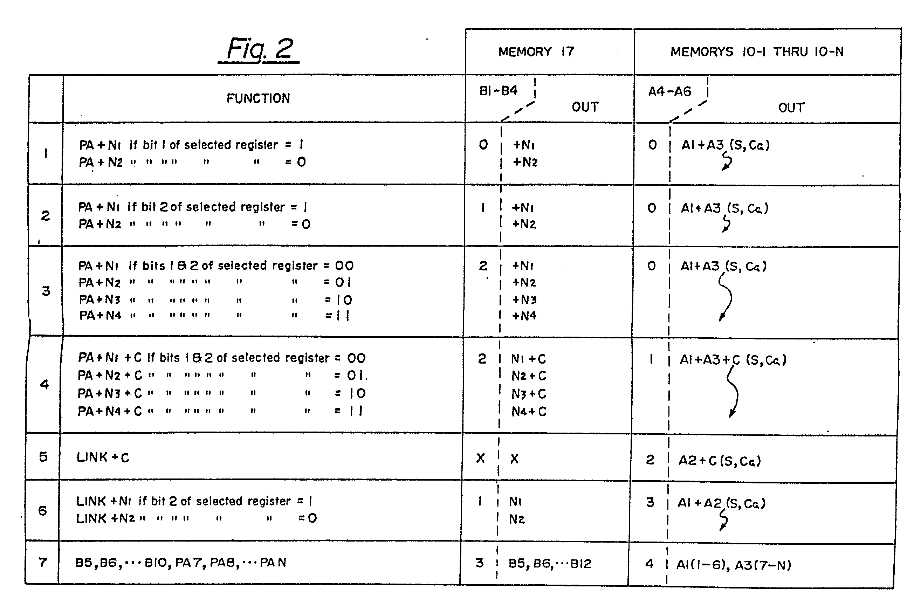

The function of the set of N-memories 10 and the memory 17 is essentially to perform a transformation of the information utilized to address these memories. This function is achieved by employing a novel structure and technique requiring a minimum of logic. To illustrate the versatility and flexibility which can be achieved, reference is made to Figure 2 and the following discussion.

In the example of row 1 of Figure 2, the control section generates the next address for the control memory 15 such that it equals the present address PA in the register 12 plus either a number N1 or N2 depending upon whether or not bit 1 of the appropriate register R1 through RN selected by selector 19 equals a 1.

To accomplish this, the memory 17 is made responsive to a predetermined code (such as 0) on its address inputs B1—B4 to provide at its output 18 the constant N1 or N2, depending upon whether or not bit 1 of the signals on its address inputs B5—B12 is a 1. Remember that signals for B1—B4 are provided by the output of control memory 15, while B5—B12 are provided by the output of the selector 19. At the same time, the N-memories 10-1 through 10-N are made responsive to a predetermined code (such as 0) on their second address inputs A4—A6 to provide signals on their outputs Q1 and Q2, respectively, indicating the sum and carry that is produced by adding the bits on their first address inputs from register 12 and memory 17.

In performing this transformation, memories 10-1 through 10-N appear to act both as a selector and an adder of the bits on their A1 and A3 inputs. Each memory has two outputs in order that sum and carry signals can be simultaneously produced. Adder 11 then completes the arithmetic process by enabling the carries to propagate from bit to bit.

Consider next the address transformation indicated in row 2 of Figure 2. That transformation is similar to the transformation described for row 1, with the only exception being that bit 2 rather than bit 1 of the selected register R1—RN is tested. To accomplish this function, memory 17 is made responsive to a predetermined code on its address inputs B1—B4 (such as a code of 1) to provide the constant N1 on its outputs 18 when bit 2 of the selected register applied to the address inputs B5—B12 of memory 17 equals 1, and to provide the constant N2 when that bit equals 0. The desired address transformation is then achieved by applying a code of 1 to the address inputs B1—B4 of memory 17 and simultaneously applying the previously described code of 0 to the address inputs A4—A6 of memories 10-1 through 10-N.

Next, in row 3 of Figure 2, an example of a four-way branch is illustrated. There, the next address is made equal to the present address plus either constants N1, N2, N3, or N4 depending upon whether bits 1 and 2 of the selected register equal 00, 01, 10, or 11, respectively. To accomplish this, memory 17 is made responsive to another code on its address inputs B1—B4 (such as a code of 2) to provide on its outputs 18, the constants N1, N2, N3, or N4 depending upon the state of bits 1 and 2 applied to its address inputs B5—B12. The desired function is then achieved by applying a code of 2 to the address inputs B1—B4 of the memory 17 and simultaneously applying the previously described code of 0 to the address inputs A4—A6 of the memories 10-1 through 10-N.

A modification of this four-way branch is illustrated in row 4 of Figure 2. There, the tests which are performed on the selected register remain the same, but the increment by which the present address is modified changes by a constant C. To accomplish this function, memories 10-1 through 10-N are made responsive to a new predetermined code on their address inputs A4—A6 (such as a code of 1) to provide signals on their outputs indicating the sum and carry that is obtained by adding the bits on their address input A1 and A3 to the constant C. In this case, the memories 10-1 through 10-N appear to simultaneously perform the functions of selecting bits on their address inputs A1 and A3, obtaining the constant C, and adding the selected bits to that constant.

Next, in the example of row 5, the control word address is formed by adding a predetermined constant to the contents of the link register 14. This is achieved by making memories 10-1 through 10-N responsive to another code on their address inputs A4—A6 (such as a code of 2), which is portion 16a of a control word from control memory 15, to provide on their respective outputs Q1 and Q2 the sum and carry that are obtained by adding the corresponding bits of the contents of the link register 14 to the constant. In this case, the memories 10-1 through 10-N appears to perform the function of selecting the contents of the link register 14, obtaining the constant C, and adding the corresponding bits of those two entities.

In row 6 of Figure 2, the control section operates to modify the contents of the link register 14 by an amount of either N1 or N2 depending upon whether bit 2 of the selector register R1—RN is equal to 1 or 0. This is accomplished by applying the previously described code of 1 to the address inputs B1—B4 of memory 17; and by simultaneously making the memories 10-1 through 10-N responsive to a new code on their address inputs A4—A6 (such as a code of 3) to provide on their outputs, signals representing the sum and carry of the bits on their respective A1 and A2 address inputs.

Next, in the example of row 7 of Figure 2, the control word address is formed by combining some of the bits of register 12 with other bits from the output of memory 17. The particular example illustrated combines bits 7—N of the contents of register 12 with bits 1-6 from the output of memory 17. This is achieved by making memories 10-1 through 10-6 responsive to a predetermined code (such as 4) on their address inputs A4—A6 to provide signals on their respective outputs equal to the signals on their A1 address inputs; and by making memories 10-7 through 10-N responsive to that same code to provide signals on their outputs equal to the signals on their A3 to address inputs.

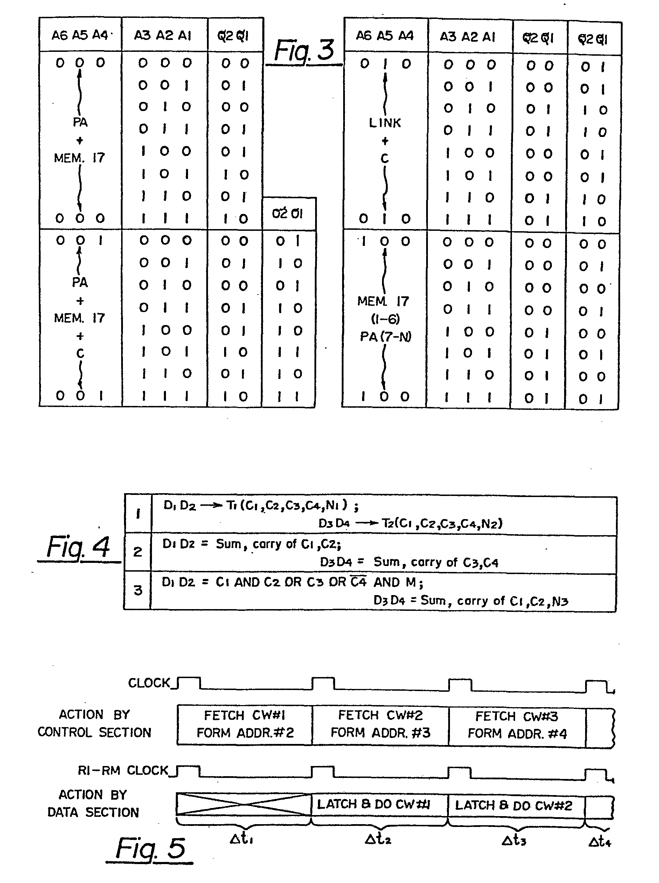

Referring now to Figure 3, the coding for memories 10-1 through 10-N which achieves the above functions will be described. In that figure, the symbols A1 through A6 correspond to address inputs A1—A6 on any of the memories 10-1 through 10-N.

When the A6—A4 address inputs receive a control word of 000, memories 10-1 through 10-N are to respond by providing signals representing the sum and carry that is obtained by adding corresponding bits of the present address and the output of memory 17. The present address of regiser 12 is received on address inputs A3, and the output of memory 17 is received on address inputs A1. Thus, where A6—A4 equals 000 as shown in Figure 3, the Q1 output column indicates the sum of address inputs A1 and A3; and the Q2 output column indicates the corresponding carry.

Similarly, when address inputs A6—A4 receive a control word of 001, memories 10-1 through 10-N respond by providing output signals representing the sum and carry that is obtained by adding corresponding bits of the present address, the output from memory 17, and a predetermined constant C. Any particular bit of that constant could be a "1" or a "0". In Figure 3, outputs Q1 and Q2 of the right most column respectively indicate the sum and carry that are obtained by adding a "1" to the bits on address inputs A1 and A3. And outputs Q1 and Q2 of the adjacent column respectively indicate the sum and carry that are obtained by adding a "0" to those same address bits.

Next, in response to a code of 010 on address inputs A6—A4, memories of 10-1 through 10-N provide signals indicating the sum and carry obtained by adding a constant C to the contents of the link register 14. Those memories where the bit of constant C equals 1 have outputs Q1 and Q2 as illustrated in the right most column; and the remaining memories have outputs as illustrated in the adjacent column.

Finally, in response to a code of 100, one portion of the memories 10-1 through 10-N must respond by passing the signals from the output of register 12, while the remaining memories are to pass signals from bus 18. To achieve this, the first six memories 10-1 through 10-6 are arranged to provide a 01 as output signals indicating the state of their A1 address input. This is indicated in the right most column where any word addressed with A1=1 has a "1" as its content, and any word addressed with A1=0 has a "0" as its contents. The remaining memories 10-7 through 10-N are arranged to provide a 01 as output signals indicating the state of the bits on their A3 address inputs, as is illustrated in the next adjacent column.

Referring now back to Figure 1, the structure and operation of that computer's data section will be described. It includes a set of N memories 30-1, 30-2, ... 30-N, which is quite similar to the control section. Each of the memories 30-1 through 30-N have first address inputs C1—C4, second address inputs C5—C8, and two pairs of outputs D1—D2 and D3—D4. Basically, the function of the memories 30-1 through 30-N is to respond to various codes on their second address inputs C5—C8 by providing signals on their outputs representing selectable transformations of the signals on their first address inputs C1—C4.

Outputs D1 and D2 of all of the memories are coupled to a first adder 31, and outputs D3—D4 of all of the memories are coupled to another adder 32. These adders in turn have their respective outputs 31A and 32A coupled to a programmable multiplexer 33. The multiplexer 33 operates to select and shift the signals from the adders 31 and 32 onto a pair of output buses 34 and 35, which in turn feed back to registers R1—RN.

All of these components of the data section, operate to transform operands in response to the control words as follows. Initially, various portions of the control word from the control memory 15 are placed into a plurality of registers 36A, 36B, 36C, and 36D. The selector 19 then responds to the portion of the control word in register 36A by passing the contents of four of the registers R1—RN to the first address inputs C1—C4 of memories 30-1 through 30-N. Memory 30-1 receives the least significant bits on its C1—C4 inputs; memory 30-2 receives the next bit in order of significance on its C1—C4 inputs; etc.

At the same time, that portion of the control word which is in register 36B is bused in parallel to the second address inputs C5—C8 of all of the memories 30-1 through 30-N. In turn, the memories are responsive to that portion of the control word to select various bits on their first address inputs C1—C4, to internally obtain constants, and to provide signals on their outputs representing transformations of those selected inputs and constants.

Some representative transformations which memories 30-1 through 30-N perform are illustrated in Figure 4. Row 1 contains a mathematical expression which indicates that, in general, outputs D1—D2 represent one selectable transformation T1 of an arbitrary number N1 and the bits on the address inputs C1—C4; and outputs D3—D4 represent another totally independent transformation T2. Specific examples of this general case are expressed in rows 2 and 3.

In row 2, the signals appearing at the outputs D1 and D2, respectively, represent the sum and carry of the bits on address inputs C1 and C2 to the memories; and the signals appearing at the outputs D3 and D4, respectively, represent the sum and carry of the bits on address inputs C3 and C4 to the memories. This transformation is useful in performing double word arithmetic. Next, in the example of row 3, the signals at outputs D1 and D2 represent the result of logically ANDing bits on address input C1 and C2, ORing the result with the bit on address C3, ORing that result with the inverse of the bits on address input C4, and ANDing that result with an arbitrary mask M. This illustrates the generality of the transformation T1 and T2. At the same time, the signals appearing at outputs D3 and D4 could independently represent signals indicating the sum and carry obtained by adding or subtracting bits on any of the address inputs C1—C4 to the memories and an arbitrary constant N3.

Next, referring to Figure 5, there is shown a timing diagram that illustrates the manner in which the above described control and data sections interact. During a time interval Δt1, the control section uses the address in register 12 to fetch a control word (CW#1) from control memory 15. At the same time, the control section forms the address of the next control word by the transformation action of memories 10-1 through 10-N and memory 17. This fetching of CW#1 and address formation is complete at the end of time interval Δt1.

Subsequently, during time interval Δt2, control word CW#1 is implemented and directs the operation of the data section. This includes directing the transformation which memories 30-1 through 30-N to perform, directing the selecting and shifting which the programmable multiplexer 33 performs, etc. Also during time interval Δt2, the control section simultaneously forms the address of the next control word (CW#3). These simultaneous operations of transforming operands in the data section and calculating subsequent addresses in the control section is repeated during each of the time intervals Δt3, Δt4 ... which follow.

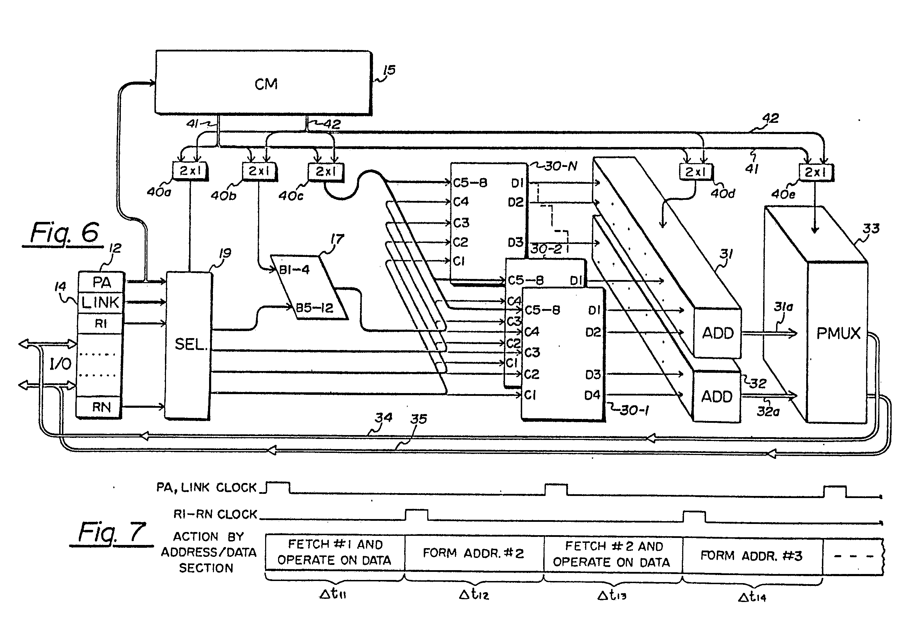

Reference now is made to Figure 6, which illustrates another embodiment of the invention. In this embodiment, the data section and control section are combined into one composite or integrated unit. This integrated unit includes some of the components as previously described in the control and data sections of Figure 1.

In particular, it includes the present address register 12, link register 14, control memory 15, and memory 17 of the Figure 1 control section. And it includes memories 30-1 through 30-N, adders 31 and 32, programmable multiplexer 33, and registers R1—RN of the Figure 1 data section. These components are interconnected as illustrated in Figure 6.

Also included in this second embodiment is a plurality of 2×1 multiplexers 40A—40E. These multiplexers operate to pass one portion of the presently active control word retrieved from control memory 15 during spaced apart time intervals, and pass the remaining portion of the retrieved control words during the period between those spaced apart time intervals. This enables the integrated control-data section to alternately operate on data and form the address for the next control word. This sequential operation is illustrated in the timing diagram of Figure 7.

In that figure, various operands in registers R1 ... Rn are selectively transformed during the spaced apart time intervals Δt11, Δt13, etc.; and the address of the next control word is formed during time intervals Δt12, Δt14, etc. Transformation of the data is accomplished in response to that portion of the control word on a bus 41. Similarly, formation of the address of the next control word is accomplished in response to that portion of the present control word on bus 42. This portion is passed through the 2×1 multiplexers 40A—40E during time intervals Δt12, Δt14, ... etc.

One attractive feature of the Figure 6 embodiment is that it requires a minimal amount of memory for its physical implementation. This is due to the fact that the memories 30-1 through 30-N of Figure 1 are time shared to alternately transform data in registers R1—RN and form addresses for the control words stored in the control memory 15. In comparison, an advantage of the Figure 1 embodiment is that it performs the address transformations and the data transformations simultaneously. This simultaneity, however, is achieved at the expense of incorporating additional hardware—i.e., memories 10-1 through 10-N and the adder 11. Thus, the two embodiments offer a trade off between performance and space.

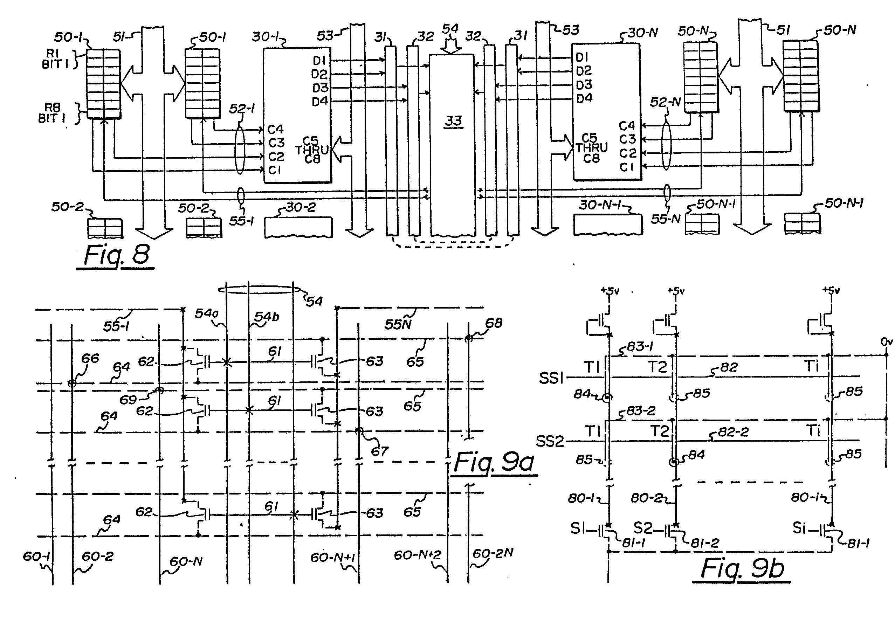

Next, referring to Figure 8, one physical layout for the invention on a semiconductor chip will be described. In this layout the least significant bit (bit 1) of all of the registers R1— RN and the corresponding portion of the selector 19 are indicated by reference numeral 50-1. Similarly, reference numerals 50-2, ... 50-N-1, 50-N respectively indicate bit 2, bit N-1, and bit N of all of the registers and their corresponding selector portion.

A plurality of leads 51 run between those registers as illustrated. One lead is provided for each register; and a signal is applied to the lead to select the corresponding register. Bit 1 of the selected register is gated onto leads 52-1; bit N of the selected register is gated onto leads 52-N; etc.

Memory 30-1 lies alongside of registers 50-1; and its C1—C4 address inputs are respectively coupled to the leads 52-1. Similarly, memory 30-N lies alongside of registers 50-N; and its C1—C4 address inputs are respectively coupled to leads 52-N. Also, a bus 53 of leads runs alongside of memories 30-1 through 30-N. This bus couples in parallel the address inputs C5—C8 of all of the memories; and it carries decode signals of the presently active control word for these memories.

Adder 31 runs alongside of bus 53 as illustrated. It receives the D1 and D2 output signals from all of the memories 30-1 through 30-N. Similarly, adder 32 runs alongside of adder 31; and it receives the D3 and D4 output signals from all of the memories. Multiplexer 33 lies between the adders 31 and 32; and it receives control signals from the control word on leads 54. Outputs from the multiplexer are coupled back to registers 50-1 through 50-N by leads 55-1 through 55-N, respectively.

Additional details of the above physical layout are illustrated in Figures 9a and 9b. These details point out the ease with which inventions' functional operation may be completely changed. Consider first the structure of multiplexer 33 as illustrated in Figure 9a. It includes two sets of N metal lines 60-1 through 60-2N. Half of them (lines 60-1 through 60-N) carry output signals from adder 31; whereas the other half carry output signals from adder 32.

Lying between lines 60-N and 60-N+1 is another set of metal lines 54. They carry control signals which are decodes of that portion of the control word that is sent to the multiplexer. One line is provided for each function that the multiplexer performs.

Each of the metal lines 54 connect via respective polysilicon leads 61 to transistor 62 and 63 as illustrated. The source of the transistors 62 are all connected to one of the multiplexer's output lines 55-1; and the source of the transistors 63 are connected to one of the output lines 55-N.

Also, each of the transistors 62 and 63 have a drain which is respectively connected to the diffusions 64 and 65. These diffusions run beneath and perpendicular to all of the metal lines 60-1 through 60-2N. To program output 55-1 of the multiplexer, each of the diffusions 64 are selectively connected to one of the overlying metal lines during the fabrication process. Reference numerals 66 and 67 illustrate examples of where these contacts could be made. Similarly, to program output 55-N, each of the diffusions 65 is selectively connected to one of the metal lines 60-1 through 60-2N. Examples of these connections are indicated by reference numerals 68 and 69.

Next, referring to Figure 9b, there is illustrated a portion of one of the memories 30-1 through 30-N. It includes a plurality of spaced apart metal lines 80-1, 80-2, ... as illustrated. One metal line is provided for each possible code on the memories second address inputs C5—C8. These metal lines are coupled through respective transistors 81-1, 81-2, ... to one of the memories outputs, such as output D1. Transistors 81-1, 81-2, ... are selectively enabled by a decode of the second address inputs C5—C8.

A plurality of polysilicon lines 82-1, 82-2, ... lie under and run perpendicular to the metal lines. Signals SS1, SS2, ... are selectively generated on one of the polysilicon lines 82-1, 81-2, ... by a decoder of the C1—C4 address inputs. Polysilicon line 82-1 forms the gate of a plurality of transistors T1, T2, ... Ti whose sources and drains are formed by a diffusion 83-1. Similarly, polysilicon line 82-2 forms the gates of a plurality of transistors T1, T2, ... Ti whose sources and drains are formed by a diffusion 83-2.

All of the sources of those transistors are connected to 0 volts. However, the drains of those transistors are selectively connected during the fabrication process to one of the metal lines 80. Reference numerals 84 indicate one exemplary set of contacts between the diffusions 83 and the metal lines 80. The absence of a contact is indicated by reference numerals 85.

In this example, when signals S1 and SS1 are simultaneously generated by the address inputs C1—C8, 0 volts is coupled from diffusion 83-1 through a contact 84 to metal line 80-1. This forces output signal D1 to approximately 0 volts. In comparison, the D1 output signal is approximately 5 volts when the contact 84 is eliminated. Thus, the D1 output signals may be made either a logical 0 or a logical 1 in accordance with the previously described Figure 3 by including or excluding the appropriate contact 84.

All of the optional contacts in the Figure 9b memories are made in the same manner as the optional contacts in the Figure 9a programmable multiplexer. That is, the optional contacts in both of those components are made between a metal line and a diffusion. Thus, the entire operation of the disclosed embodiments can be changed completely simply by reworking the mask that defines the location of the holes for those contacts.

Various preferred embodiments of the invention have now been described in detail. In addition, many changes and modifications can be made to these details without departing from the nature and spirit of the invention. For example, the optional connections in the Figure 9a programmable multiplexer, and the optional contacts in the Figure 9b memory may be made at the diffusion level. That is in Figure 9a, the metal to diffusion connections in holes 66, 67, 68, and 69 would always be made; and in Figure 9b, the metal to diffusion connections in holes 84 and 85 would also always be made. Then a small (e.g. 3—4 micros) patch would optionally be provided in the diffusions near the above connections.

As another modification, the memories 10-1 through 10-N could be read/write or PROM type memories. Also, memories 30-1 through 30-N of either the Figure 1 or Figure 6 embodiment could be similarly modified. Further, any of the registers R1—RN, Link, and PA may be content addressable, or part of a stack. Therefore, since many such modifications are possible, it is to be understood that the invention is not limited to said details but as defined by the appended claims.

**Claims**

1. A digital computer having a control section and a control memory (15), said control section comprising N memories (10-1 to 10-N), each having first address inputs (A1 to A3), second address inputs (A4—6) and a pair of outputs (Q1 and Q2), characterised in that said control section also includes a plurality of registers (12, 14) each having its ith bit coupled to a first address input on the ith one of said N memories where i equals 1, ... N, in that the second address inputs of said N memories are coupled to said control memory to receive a portion (16a) of the presently active control word therefrom, in that each of said N memories is responsive to the control word portion on its second address inputs to generate signals on its pair of outputs representing programmable arithmetic transformations of the bits on its first address inputs, and in that the signals on the pairs of outputs of all said N memories are combined and fed to said control memory to address a successive control word.

2. A digital computer according to Claim 1, characterised in that the signal on the pairs of outputs are combined by an adder (11) coupled to the pairs of outputs from all said N memories, said adder being adapted to form signals representative of the sum of all said outputs.

3. A digital computer according to Claim 1 or Claim 2, characterised in that said control section includes a further memory (17) having first address inputs (B5—B12) coupled to a plurality of bits from further registers (R1—RN) and having multiple outputs (18) with the ith output being coupled to a first address input on the ith one of said N memories.

4. A digital computer according to Claim 3, characterised in that said further memory (17) also includes second address inputs (B1—B4), coupled to receive a portion of said control word and is responsive thereto for generating digital numbers on its multiple outputs, indicating the state of the register coupled to its first address inputs.

5. A digital computer according to Claim 4, characterised in that said one of said registers is coupled to said further memory (17) through a selector (19) for selecting one of said registers from said further registers (R1—RN).

6. A digital computer according to any of the preceding Claims, characterised in that each of said N memories is responsive to a predetermined code on its second address inputs (A4—6) to generate signals on its pair of outputs (Q1 and Q2), indicating the sum and carry obtained by adding together selectable bits on its first address inputs (A1—A3).

7. A digital computer according to any of Claims 1—5, characterised in that each of said N memories is responsive to a pre-determined code on its second address inputs (A4—6) to generate signals on its pair of outputs (Q1 and Q2), indicating the sum and carry obtained by adding selectable bits on its first address inputs (A1—A3) to a pre-determined constant.

8. A digital computer according to any of Claim 1—5, characterised in that some of said N memories are responsive to a pre-determined code on their second address inputs to generate signals on their outputs, indicating a transformation of bits from one selectable register on their first address inputs and the others of said N memories are responsive to the same pre-determined code to generate signals on their outputs, indicating a transformation of bits from another selectable register on their first address inputs.

9. A digital computer according to any of the preceding Claims, characterised in that at least some of said N memories are programmable.

10. A digital computer according to any of the preceding Claims, characterised in that said control section further comprises means for simultaneously shifting selectable outputs of said adder (11) by a programmable number of bit positions in reponse to another portion of said active control word.

11. A digital computer according to Claim 10, characterised in that each of said N memories has two pairs of outputs.

12. A digital computer according to Claim 11, characterised in that at least four of said registers are simultaneously coupled through said selector to said first address inputs of said N memories.

13. A digital computer according to Claim 11, characterised in that each of said N memories is responsive to a pre-determined code on its second address inputs to generate signals in one of its output pairs, indicating the sum and carry obtained by adding bits from two selectable registers on its first address inputs, and simultaneously to generate signals on its other output pair, indicating the sum and carry obtained by adding bits from two other selectable registers on its first address inputs.

14. A digital computer having an integrated control/data section and a control memory (15), said integrated control/data section comprising N programmable memories (30-1 to 30-N), each having first address inputs (C1—C4), second address inputs (C5—C8), and at least one pair of outputs (D1 and D2), characterised in that said integrated control/data section also includes a plurality of registers (PA, LINK) each having its ith bit coupled to a first address input on the ith one of said N memories, where i=1 ...N, in that the second address inputs of said N memories are coupled by a multiplexer (40c) to said control memory to receive one portion of a control word during pre-determined spaced apart time intervals and to receive another portion of said control word between said time intervals, in that each of said N memories is responsive to the control word portion on its second address inputs, to generate signals on its outputs, representing programmable transformations of the bits on its first address inputs, and in that the signal on the pairs of outputs of all said N memories are combined to form control memory addresses during said time intervals, and to form transformed operands between said time intervals.

15. A digital computer according to Claim 14, characterised in that the signals on the pairs of outputs are combined by an adder to form signals representative of the sum of all said outputs, and in that selectable outputs of said adder are shifted by a programmable number of bit positions in response to a portion of said control word.

16. A digital computer according to Claim 14 or Claim 15 wherein each of said N memories includes a plurality of selectable electrical contacts for programming said transformations.

**Revendications**

1. Ordinateur numérique ayant une section de commande et une mémoire de commande (15), la section de commande comportant N mémoires (10-1 ... 10-N) ayant des premières entrées d'adresse (A1 ... A3), des secondes entrées d'adresse (A4—6) et une paire de sorties (Q1 et Q2), caractérisé en ce que la section de commande comporte également un ensemble de registres (12, 14) ayant chacun son bit d'ordre (i) couplé à une première entrée d'adresse de l'une des N mémoires avec i égal à 1, ... N, en ce que les secondes entrées d'adresse des N mémoires sont couplées à la mémoire de commande pour recevoir une partie (16a) du mot de commande présentement actif, en ce que chacune des N mémoires répond à la partie de mot de commande de ses secondes entrées d'adresse pour générer des signaux sur sa paire de sorties représentant les transformations arithmétiques programmables de ces bits sur ses premières entrées d'adresse et en ce que les signaux sur les paires de sorties de toutes les N mémoires sont combinés et sont appliqués à la mémoire de commande pour adresser un mot de commande successif.

2. Ordinateur numérique selon la revendication 1, caractérisé en ce que les signaux sur les paires de sorties sont combinés par un additionneur (11) couplé aux paires de sorties de toutes les N mémoires, l'additionneur étant adapté pour former des signaux représentant la somme de toutes les sorties.

3. Ordinateur numérique selon la revendication 1 ou la revendication 2, caractérisé en ce que la section de commande comporte en outre une mémoire (17) ayant des premières entrées d'adresse (B5—B12) couplées à un ensemble de bits d'autres registres (R1—RN) et ayant des sorties multiplex (18), la sortie numéro i étant couplée à une première entrée d'adresse de la mémoire numéro i parmi les N mémoires.

4. Ordinateur numérique selon la revendication 3, caractérisé en ce que cette autre mémoire (17) comporte des secondes entrées d'adresse (B1—B4) couplées pour recevoir une partie du mot de commande et répondant à celui-ci pour générer des nombres numériques sur ses sorties multiples, indiquant l'état du registre couplé à ses premières entrées d'adresse.

5. Ordinateur numérique selon la revendication 4, caractérisé en ce que l'un des registres est couplé à cette autre mémoire (17) par un sélecteur (19) pour choisir l'un des registres parmi les autres registres (R1—RN).

6. Ordinateur numérique selon l'une quelconque des revendications précédentes, caractérisé en ce que chacune des N mémoires répond à un code prédéterminé sur ses secondes entrées d'adresse (A4—A6) pour générer des signaux sur sa paire de sorties (Q1 et Q2) indiquant la somme et le report obtenus par addition des bits choisis sur les premières entrées d'adresse (A1—A3).

7. Ordinateur numérique selon l'une des revendications 1—5, caractérisé en ce que chacune des N mémoires répond à un code prédéterminé sur ses secondes entrées d'adresse (A4—A6) pour générer des signaux sur sa paire de sorties (Q1 et Q26 indiquant la somme et le report obtenus par addition des bits choisis sur ses premières entrées d'adresse (A1—A3) à une constante prédéterminée.

8. Ordinateur numérique selon l'une des revendications 1—5, caractérisé en ce que certaines des N mémoires répondent à un code prédéterminé sur les secondes entrées d'adresse pour générer des signaux sur leurs sorties, indiquant une transformation des bits d'un registre susceptible d'être sélectionné sur les premières entrées d'adresse et les autres des N mémoires répondent au même code prédéterminé pour générer des signaux sur leurs sorties indiquant une transformation des bits d'un autre registre susceptible d'être sélectionné sur leurs premières entrées d'adresse.

9. Ordinateur numérique selon l'une quelconque des revendications précédentes, caractérisé en ce qu'au moins certaines des N mémoires sont programmables.

10. Ordinateur numérique selon l'une des revendications précédentes, caractérisé en ce que la section de commande comporte en outre des moyens pour décaler simultanément les sorties susceptibles d'être sélectionnées de l'additionneur (11) pour un nombre programmable de positions de bits en réponse à une autre partie du mot de commande actif.

11. Ordinateur numérique selon la revendication 10, caractérisé en ce que chacune des N mémoires présente deux paires de sorties.

12. Ordinateur numérique selon la revendication 11, caractérisé en ce qu'au moins quatre de registres sont couplés simultanément pour le sélecteur sur les premières entrées d'adresse des N mémoires.

13. Ordinateur numérique selon la revendication 11, caractérisé en ce que chacune des N mémoires répond à un code prédéterminé sur ses secondes entrées d'adresse pour générer des signaux sur l'une de ses paires de sorties indiquant la somme et le report obtenus par addition des bits des deux registres susceptibles d'être sélectionnés sur ses premières entrées d'adresse et simultanément pour générer des signaux sur son autre paire de sorties indiquant la somme et le report obtenus par addition des bits de deux autres registres susceptibles d'être choisis sur ses premières entrées d'adresse.

14. Ordinateur numérique ayant une section commande/données intégrée et une mémoire de commande (15), la section commande/données, intégrée comportant N mémoires programmables (30-1 ... 30-N) ayant chacune des premières entrées d'adresse (C1—C4), des secondes entrées d'adresse (C5—C8) et au moins une paire de sorties (D1 et D2), caractérisé en ce que la section commande/données, intégrée comporte également un ensemble de registres (PA, LIAISON) ayant chacun sont bit d'ordre i couplé à une première entrée d'adresse de la mémoire numéro i parmi les N mémoires, i étant égal à 1, ... N, en ce que les secondes entrées d'adresse parmi les N mémoires sont couplées par un multiplexeur (40c) à la mémoire de commande pour recevoir une partie d'un mot de commande au cours des intervalles de temps espacés, prédéterminés, et pour recevoir une autre partie du mot de commande entre les intervalles de temps, en ce que chacune des N mémoires répond à la partie de mot de commande sur ses secondes entrées d'adresse pour générer les signaux sur ses sorties représentant les transformations programmables des bits sur ses premières entrées d'adresse et en ce que les signaux sur les paires de sorties de toutes les N mémoires sont combinés pour former les adresse de commande de mémoires au cours des intervalles de temps et former des opérandes transformées entre les intervalles de temps.

15. Ordinateur numérique selon la revendication 14, caractérisé en ce que les signaux des paires de sorties sont combinés pour un additionneur pour former des signaux représentant la somme de toutes les sorties et en ce que les sorties susceptibles d'être sélectionnées de l'additionneur sont décalées par un nombre programmable de positions de bits en réponse à une partie du mot de commande.

16. Ordinateur numérique selon la revendication 14 ou la revendication 15, caractérisé en ce que chacune des N mémoires comporte un ensemble de contacts électriques susceptibles d'être sélectionnés pour programmer les transformations.

**Patentansprüche**

1. Digitalrechner mit einem Steuerspeicher (15) und einem Steuerabschnitt, der N Speicher (10-1 bis 10-N) enthält, die jeweils erste Adresseneingänge (A1 bis A3), zweite Adresseneingänge (A4 bis A6) und zwei Ausgänge (Q1 und Q2) aufweisen, dadurch gekennzeichnet, daß der Steuerabschnitt zusätzlich mehrere Register (12, 14) enthält, deren jeweils i-tes Bit mit einem ersten Adresseneingang des i-ten Speichers der N Speicher verbunden ist, wobei i=1 ...N ist, daß die zweiten Adresseneingänge der N Speicher mit dem Steuerspeicher verbunden sind und von ihm einen Teil (16a) des jeweils aktiven Steuerwortes empfangen, daß jeder der N Speicher auf den an den zweiten Adresseneingängen anliegenden Steuerwortteilen ein Signal an seinen zwei Ausgängen abgibt, das programmierbare arithmetische Transformationen der an ihren ersten Adresseneingängen anliegenden Bits beinhaltet und daß die Signal an den beiden Ausgängen aller N Speicher verbunden und dem Steuerspeicher zum Adressieren eines Folgesteuerwortes eingegeben werden.

2. Digitalrechner nach Anspruch 1, dadurch gekennzeichnet, daß die Signale an den beiden Ausgängen mittels eines Addierers (11) verbunden werden, der mit den beiden Ausgängen aller N Speicher verbunden ist und Signale bildet, die der Summe aller Ausgänge entsprechen.

3. Digitalrechner nach Anspruch 1 oder 2, dadurch gekennzeichnet, daß der Steuerabschnitt einen weiteren Speicher (17) enthält, der erste Adresseneingänge (B5—B12) enthält, die mit mehreren Bits weiterer Register (R1—RN) verbunden sind und der einen Mehrfachausgang (18) aufweist, wobei der i-te Ausgang mit einem ersten Adresseneingang des i-ten der N Speicher verbunden ist.

4. Digitalrechner nach Anspruch 3, dadurch gekennzeichnet, daß der weitere Speicher (17) zusätzlich zweite Adresseneingänge (B1—B4) enthält, denen ein Teil des Steuerworts eingegeben wird und der in Abhängigkeit von dem Steuerwort digitale Ziffern an seinem Mehrfachausgang erzeugt, die den Zustand des mit seinen ersten Adresseneingängen verbundenen Registers anzeigen.

5. Digitalrechner nach Anspruch 4, dadurch gekennzeichnet, daß eins der Register mit dem weiteren Speicher (17) über einen Selektor (19) zum Auswählen eines der Register aus den weiteren Registern (R1—RN) verbunden ist.

6. Digitalrechner nach einem der vorstehenden Ansprüche, dadurch gekennzeichnet, daß jeder der N Speicher auf einen vorbestimmten Code an seinen zweiten Adresseneingängen (A4—A6) anspricht und Signale an seinen beiden Ausgängen (Q1 und Q2) abgibt, die der Summe und dem Übertrag entsprechen, die durch Addition auswählbarer Bits an den ersten Adresseneingängen (A1—A3) gewonnen werden.

7. Digitalrechner nach einem der Ansprüche 1 bis 5, dadurch gekennzeichnet, daß jeder der N Speicher auf einen vorbestimmten Code an seinen zweiten Adresseneingängen (A4—A6) anspricht und Signale an seinen beiden Ausgängen (Q1 und Q2) erzeugt, die der Summe und dem Übertrag entsprechen, die durch Addition ausgewählter Bits an seinen ersten Adresseneingängen (A1—A3) zu einer vorbestimmten Konstanten gewonnen werden.

8. Digitalrechner nach einem der Ansprüche 1 bis 5, dadurch gekennzeichnet, daß einige der N Speicher auf einen vorbestimmten Code an ihren zweiten Adresseneingängen ansprechen und Signale an ihren Ausgängen abgeben, die einer Transformation der von einem auswählbaren Register an ihren ersten Adresseneingängen entsprechen und die anderen der N Speicher auf denselben vorbestimmten Code ansprechen und Signale an ihren Ausgängen abgeben, die eine Transformation anderer auswählbarer Register an ihren ersten Adresseneingängen anzeigen.

9. Digitalrechner nach einem der vorstehenden Ansprüche, dadurch gekennzeichnet, daß mindestens einige der N Speicher programmierbar sind.

10. Digitalrechner nach einem der vorstehenden Ansprüche, dadurch gekennzeichnet, daß der Steuerabschnitt zusätzlich eine Vorrichtung zum gleichzeitigen Verschieben auswählbarer Ausgänge des Addierers (11) um eine programmierbare Anzahl von Bitpositionen auf einen anderen Teil des aktiven Steuerworts enthält.

11. Digitalrechner nach Anspruch 10, dadurch gekennzeichnet, daß jeder der N Speicher zwei Paar Ausgänge aufweist.

12. Digitalrechner nach Anspruch 11, dadurch gekennzeichnet, daß mindestens vier der Register gleichzeitig über den Selektor mit den ersten Adresseneingängen der N Speicher verbunden sind.

13. Digitalrechner nach Anspruch 11, dadurch gekennzeichnet, daß jeder der N Speicher auf einen vorbestimmten Code an seinen zweiten Adresseneingängen anspricht und Signale an einen seiner Ausgangspaare abgibt, die der Summe und dem Übertrag entsprechen, die durch Addition der Bits zweier auswählbarer Register an seinen ersten Adresseneingängen gewonnen werden und der gleichzeitig Signale an seinen anderen Ausgangspaaren abgibt, die die Summe und den Übertrag beinhalten, die durch Addition der Bits zweier anderer auswählbarer Register an seinen ersten Adresseneingängen gewonnen werden.

14. Digitalrechner mit einem Steuerspeicher (15) und einem integrierten Steuer- und Datenabschnitt, der N programmierbare Speicher (30-1 bis 30-N) enthält, die jeweils erste Adresseneingänge (C1—C4), zweite Adresseneingänge (C5—C8) und mindestens zwei Ausgänge (D1 und D2) aufweisen, dadurch gekennzeichnet, daß der integrierte Steuer- und Datenabschnitt zusätzlich mehrere Register (PA, LINK) enthält, deren jeweils i-tes Bit mit einem ersten Adresseneingang des i-ten der N Speicher verbunden ist, wobei i=1 ...N ist, daß die zweiten Adresseneingänge der N Speicher mittels eines Multiplexers (40c) mit dem Steuerspeicher verbunden sind und einen Teil des Steuerwortes während vorbestimmter, getrennter Zeitintervalle und einen weiteren Teil des Steuerwortes zwischen den Zeitintervallen empfangen, daß jeder der N Speicher auf den an seinem zweiten Adresseneingang anliegenden Steuerwortteil anspricht und Signale an seinen Ausgängen abgibt, die programmierbare Transformationen der an seinem ersten Adresseneingang anliegenden Bits derstellen und daß die Signale an den beiden Ausgängen aller N Speicher miteinander zur Bildung von Steuerspeicheradressen während der Zeitintervalle kombiniert werden und transformierte Operanden zwischen den Zeitintervallen bilden.

15. Digitalrechner nach Anspruch 14, dadurch gekennzeichnet, daß die Signale an den beiden Ausgängen mittels eines Addierers zur Bildung von Signalen verbunden werden, die der Summe aller Ausgänge entsprechen und daß auswählbare Ausgänge des Addierers um eine programmierbare Anzahl von Bitstellen in Abhängigkeit von einem Teil des Steuerworts verschoben werden.

16. Digitalrechner nach Anspruch 14 oder 15, dadurch gekennzeichnet, daß jeder der N Speicher mehrere auswählbare elektrische Kontakte zum Programmieren der Transformationen enthält.

Fig. 1

## Fig. 2

| | FUNCTION | MEMORY 17 | | MEMORYS 10-1 THRU 10-N | |
|---|---|---|---|---|---|
| | | BI-B4 | OUT | A4-A6 | OUT |
| 1 | PA + N₁ if bit 1 of selected register = 1<br>PA + N₂ " " " " " " = O | O | +N₁<br>+N₂ | O | AI+A3 (S, Cₐ) |
| 2 | PA + N₁ if bit 2 of selected register = 1<br>PA + N₂ " " " " " " = O | I | +N₁<br>+N₂ | O | AI + A3 (S, Cₐ) |
| 3 | PA + N₁ if bits 1 & 2 of selected register = OO<br>PA + N₂ " " " " " " " = O I<br>PA + N₃ " " " " " " " = I O<br>PA + N₄ " " " " " " " = I I | 2 | +N₁<br>+N₂<br>+N₃<br>+N₄ | O | AI + A3 (S, Cₐ) |
| 4 | PA + N₁ + C if bits 1 & 2 of selected register = OO<br>PA + N₂ + C " " " " " " " = O I.<br>PA + N₃ + C " " " " " " " = I O<br>PA + N₄ + C " " " " " " " = I I | 2 | N₁ + C<br>N₂ + C<br>N₃ + C<br>N₄ + C | I | AI + A3 + C (S, Cₐ) |
| 5 | LINK + C | X | X | 2 | A2 + C (S, Cₐ) |
| 6 | LINK + N₁ if bit 2 of selected register = 1<br>LINK + N₂ " " " " " " = O | I | N₁<br>N₂ | 3 | AI + A2 (S, Cₐ) |
| 7 | B5, B6, ⋯ BIO, PA7, PA8, ⋯ PA N | 3 | B5, B6, ⋯ BI2 | 4 | AI(I-6), A3(7-N) |

0 028 472

## Fig. 3

| A6 A5 A4 | A3 A2 A1 | Q2 Q1 | A6 A5 A4 | A3 A2 A1 | Q2 Q1 | Q2 Q1 |
|---|---|---|---|---|---|---|
| 0 0 0 | 0 0 0 | 0 0 | 0 1 0 | 0 0 0 | 0 0 | 0 1 |
|  | 0 0 1 | 0 1 |  | 0 0 1 | 0 0 | 0 1 |
|  | 0 1 0 | 0 0 |  | 0 1 0 | 0 1 | 1 0 |
| PA | 0 1 1 | 0 1 | LINK | 0 1 1 | 0 1 | 1 0 |
| + |  |  | + |  |  |  |
| MEM. 17 | 1 0 0 | 0 1 | C | 1 0 0 | 0 0 | 0 1 |
|  | 1 0 1 | 1 0 |  | 1 0 1 | 0 0 | 0 1 |
|  | 1 1 0 | 0 1 |  | 1 1 0 | 0 1 | 1 0 |
| 0 0 0 | 1 1 1 | 1 0 | 0 1 0 | 1 1 1 | 0 1 | 1 0 |

| A6 A5 A4 | A3 A2 A1 | Q2 Q1 | Q2 Q1 | A6 A5 A4 | A3 A2 A1 | Q2 Q1 | Q2 Q1 |
|---|---|---|---|---|---|---|---|
| 0 0 1 | 0 0 0 | 0 0 | 0 1 | 1 0 0 | 0 0 0 | 0 0 | 0 0 |
|  | 0 0 1 | 0 1 | 1 0 |  | 0 0 1 | 0 0 | 0 1 |
| PA | 0 1 0 | 0 0 | 0 1 |  | 0 1 0 | 0 0 | 0 0 |
| + | 0 1 1 | 0 1 | 1 0 | MEM. 17 | 0 1 1 | 0 0 | 0 1 |
| MEM. 17 | 1 0 0 | 0 1 | 1 0 | (1–6) | 1 0 0 | 0 1 | 0 0 |
| + | 1 0 1 | 1 0 | 1 1 | PA (7–N) | 1 0 1 | 0 1 | 0 1 |
| C | 1 1 0 | 0 1 | 1 0 |  | 1 1 0 | 0 1 | 0 0 |
| 0 0 1 | 1 1 1 | 1 0 | 1 1 | 1 0 0 | 1 1 1 | 0 1 | 0 1 |

## Fig. 4

| | |
|---|---|
| 1 | $D_1 D_2 \longrightarrow T_1(C_1, C_2, C_3, C_4, N_1)$ ;<br>$\qquad\qquad D_3 D_4 \longrightarrow T_2(C_1, C_2, C_3, C_4, N_2)$ |
| 2 | $D_1 D_2 = Sum, carry\ of\ C_1, C_2;$<br>$\qquad\qquad D_3 D_4 = Sum, carry\ of\ C_3, C_4$ |
| 3 | $D_1 D_2 = C_1\ AND\ C_2\ OR\ C_3\ OR\ \overline{C_4}\ AND\ M;$<br>$\qquad\qquad D_3 D_4 = Sum, carry\ of\ C_1, C_2, N_3$ |

CLOCK

| ACTION BY CONTROL SECTION | FETCH CW#1 FORM ADDR.#2 | FETCH CW#2 FORM ADDR.#3 | FETCH CW#3 FORM ADDR.#4 | |
|---|---|---|---|---|

RI–RM CLOCK

| ACTION BY DATA SECTION | ⨯ | LATCH & DO CW#1 | LATCH & DO CW#2 | |
|---|---|---|---|---|

$\Delta t_1 \qquad \Delta t_2 \qquad \Delta t_3 \qquad \Delta t_4$

## Fig. 5

3

_Fig. 6_

CM

41 42 42

2x1 2x1 2x1 2x1 2x1
40a 40b 40c 40d 40e

12
14
PA
LINK
R1
I/O
......
......
RN

19
SEL.

17
B1-4
B5-12

30-N
C5-8 D1
C4 D2
C3
C2 D3
C1 30-2

C5-8 D1
C4 C5-8 D1
C3 C4 D2
C2 C3
C1 C2 D3
C1 D4
30-1

31
ADD 31a
32 PMUX 33
ADD 32a

34 35

_Fig. 7_

PA, LINK CLOCK

RI-RN CLOCK

| ACTION BY ADDRESS/DATA SECTION | FETCH #1 AND OPERATE ON DATA | FORM ADDR. #2 | FETCH #2 AND OPERATE ON DATA | FORM ADDR. #3 | - - - |

$\Delta t_{11}$  $\Delta t_{12}$  $\Delta t_{13}$  $\Delta t_{14}$

Fig. 8

Fig. 9a

Fig. 9b